# EUROPÄISCHE PATENTANMELDUNG

(11) **EP 4 806 793 A1**
(43) Veröffentlichungstag der Anmeldung: **16.09.2026**
(21) Anmeldenummer: 26164723.4
(22) Anmeldetag: 13.03.2026
(51) Int. Cl.: B64U 10/30

(54) **ROBOTER, WELCHER ZU EINER BEWEGUNG UNTERHALB UND IN KONTAKT MIT EINER RAUMDECKE EINGERICHTET IST**

(30) Priorität: 13.03.2025 DE 102025109673
(71) Anmelder: Georg-August-Universität Göttingen Stiftung Öffentlichen Rechts, 37073 Göttingen (DE)
(72) Erfinder: Baum, Marcus, 37085 Göttingen (DE); Kurda, Aaron, 37075 Göttingen (DE)
(74) Vertreter: Weickmann & Weickmann PartmbB

(57) **Zusammenfassung**

Die vorliegende Erfindung betrifft einen Roboter (100), welcher zu einer Bewegung unterhalb und in Kontakt mit einer Raumdecke (D) eingerichtet ist, umfassend wenigstens einen Auftriebskörper (102), welcher mit einem Gas gefüllt ist, welches leichter als Luft ist, und wenigstens eine Antriebseinheit (104), welche dazu eingerichtet ist, den wenigstens einen Auftriebskörper (102) in Rotation zu einem Abrollen an der Raumdecke (D) anzutreiben, wobei die Antriebseinheit (106) derart bezüglich des Auftriebskörpers (102) angeordnet ist, dass sie bei einer Bewegung des Roboters (100) beabstandet von der Raumdecke (D) verbleibt.

## Beschreibung

Die vorliegende Erfindung betrifft einen Roboter, welcher zu einer Bewegung unterhalb und in Kontakt mit einer Raumdecke eingerichtet ist.

Es sind unterschiedliche Anwendungsfälle denkbar, in welchen Roboter in Innenräumen eingesetzt werden können und insbesondere hierbei nicht mit dem Untergrund in Kontakt stehen sollen. Ein nicht einschränkendes Beispiel hierfür wäre eine Sensordatenerfassung von oben her, beispielsweise für eine Überwachung eines entsprechenden Arbeitsbereichs innerhalb eines geschlossenen Raums aus der Vogelperspektive. Ganz allgemein können derartige Roboter jedoch für beliebige Aufgaben in Räumen eingesetzt werden, in welchen sie zu einer Fortbewegung unterhalb der Raumdecke in der Lage sein müssen, in einem besonders einfachen Fall könnten derartige Roboter beispielsweise als eine bewegliche Markierung bestimmter Positionen an Raumdecken dienen, auch ohne dass sie hierzu mit einer Sensorik für eine Überwachung oder Sensordatenerfassung eingerichtet sind. Weitere Anwendungsfälle, in welchen eine Sensorik nicht unbedingt nötig wäre, können ferner Gaming- und Entertainment-Anwendungen umfassen, also beispielsweise Licht- oder Drohnenshows.

Für solche Zwecke werden in letzter Zeit immer häufiger kleine unbemannte Luftfahrzeuge eingesetzt, welche auch als Drohnen oder UAVs (Unmanned aerial vehicles) bezeichnet werden. Hierbei sind Umgebungen in Innenräumen besonders herausfordernd für derartige UAVs, da häufig auf eingeschränktem Raum und in der Nähe von Personen oder Ausrüstung navigiert werden muss, was ein erhöhtes Risiko von Kollisionen mit sich bringt und allgemein die zur Verfügung stehenden Bewegungsbereiche einschränkt.

Ein Beispiel für einen Bautyp derartiger UAVs besteht in sogenannten Multikoptern, welche mithilfe einer Mehrzahl von Propellern Auftrieb erzeugen und sich durch differenzielle Ansteuerung der genannten Propeller im Raum fortbewegen können. Jedoch verbrauchen derartige Multikopter durch den permanent mechanisch zu erzeugenden Auftrieb sehr viel Energie und ermöglichen daher nur eingeschränkte durchgehende Flugzeiten. Ferner sind die Propeller relativ laut und können eine Gefahr für Personen oder Gegenstände in der Umgebung darstellen, während sie auch selbst empfindlich hinsichtlich Beschädigungen bei einem Anstoßen an Gegenständen oder Ähnlichem in den jeweiligen Innenräumen sind.

Dem hingegen gelten unbemannte Luftschiffe als relativ sicher und weisen durch ihren statischen Auftrieb längere Flugzeiten als Multikopter auf. Andererseits sind sie jedoch hinsichtlich ihrer Navigationsfähigkeit und ihrer Nutzlastkapazitäten beschränkt und benötigen ebenfalls Propeller für ihren Antrieb mit den sich hierdurch ergebenden, bereits angesprochenen Nachteilen.

Sowohl Multikopter als auch Luftschiffe sind bekannterweise zu einer dreidimensionalen Bewegung in der Lage, das heißt, dass sie sich nicht nur in einer horizontalen Ebene, sondern auch in vertikaler Richtung bewegen können. In bestimmten Anwendungsfällen, beispielsweise der oben bereits angesprochenen Überwachung von Räumen, ist jedoch eine derartige vollständige dreidimensionale Bewegbarkeit im Raum zunächst einmal nicht notwendig. Insbesondere kann in derartigen Szenarien die Vogelperspektive völlig ausreichend sein, das heißt, dass auf den Freiheitsgrad in vertikaler Richtung zunächst einmal verzichtet werden kann und ein permanenter Kontakt eines entsprechenden Roboters mit der Raumdecke akzeptabel ist.

Dementsprechend bieten sich für derartige Anwendungsfälle Deckenroboter an, welche die maximale Raumhöhe ausnutzen und hierzu spezielle Infrastrukturen im Bereich der Raumdecke benötigen. Beispielsweise sind im Stand der Technik Hängeroboter (Fukui et al. 2014; Hangbot: A Ceiling Mobile Robot with Robust Locomotion under a Large Payload: Basic Design and Development of Key Mechanisms, Springer Berlin Heidelberg, pp. 685-694) und auf Magneten basierende Systeme (Seriani et al. 2019, "Upside-down robots: Modeling and experimental validation of magneticadhesion mobile systems" Robotics, vol. 8, No.2, p. 41) ebenso wie Kletterroboter vorgeschlagen worden, welche mithilfe von Unterdruck an Wänden klettern können (Fang et al. 2022, "Design and technical development of wall-climbing robots: A review" Journal of Bionic Engineering, vol. 19, No.4 pp. 877-901).

Weiterhin ist es prinzipiell bekannt, in bodengebundenen Anwendungen sphärische Roboter einzusetzen, wobei eine Übersicht über entsprechende Anwendungsfälle beispielsweise in Bujnac et al. 2022, Spherical Robots for Special Purposes: A Review on Current Possibilities, Sensors, 22, 1413 aufgeführt ist. Hierbei werden verschiedene etablierte Antriebsmechaniken erläutert, welche unterschiedliche Bewegungsformen ermöglichen. Wie angesprochen, sind jedoch sämtliche dort beschriebenen kugelförmigen Roboter derart ausgeführt, dass sie auf Untergründen bzw. Oberflächen aufliegen, welche dann einen entsprechenden Fahruntergrund für eine Fortbewegung davon bilden.

Weitere Beispiele für kugelförmige Roboter zur Fortbewegung auf Untergründen sind indes aus der US 8 571 781 B2 und der US 2013 0233 630 A1 bekannt, in welchen jeweils durch eine Antriebsvorrichtung eine Rotation des kugelförmigen Roboterkörpers ausgelöst wird und dieser in einer solchen Weise zu einer Bewegung auf dem Hintergrund angetrieben wird.

Ferner ist aus der US9428019B1 ein amphibischer Kugelroboter bekannt, welcher sich sowohl an Land als auch in Wasser oder Schnee präzise fortbewegen kann, während aus Williams and Hong 2021; Introduction and preliminary investigation of buoyancy assisted robots that are cheap, safe, and will never fall down; ASME 2021 International Design Engineering Technical Conferences and Computers and Information in Engineering Conference - Vol. 8B: 45th Mechanisms and Robotics Conference (MR), ser. IDETC-CIE2021 American Society of Mechanical Engineers, Aug. 2021 auftriebsunterstützte Roboter (BAR - Buoyancy Assisted Robots) bekannt sind, welche Auftrieb als Hauptmittel zur Wirkung gegen die Schwerkraft einsetzen und sich dadurch auszeichnen, dass sie in der Regel sehr leicht sind und dementsprechend kaum Potential zur Hervorrufung schwerwiegender Unfälle besteht. Hierbei kann durch das Verhältnis zwischen Auftrieb und Gewicht gesteuert werden, ob ein solcher Roboter sich in vertikaler Richtung bewegen kann oder ob er lediglich ein aufrechter Roboter mit Bodenkontakt ist.

Ein weiteres Beispiel für einen autonomen, kleinformatigen Deckenroboter findet sich in der JP 2005 349 517 A, welcher als entsprechende Fortbewegungseinheit Beine, einen Kettenantrieb oder ähnliches aufweist. Zur Erzeugung von Auftrieb werden in diesem Zusammenhang Propeller, ein mit Helium gefüllter Ballon oder ähnliches vorgeschlagen. Hierdurch wird die auf die Roboterkomponenten wirkende Schwerkraft reduziert, was wiederum die Bewegung auf dreidimensionalen Oberflächen ermöglicht.

Andererseits sind Beispiele für "leichter als Luft"-Drohnen beispielsweise aus der US 11 840 358 B2 und der CN 206 171 785 U bekannt, in welchen jeweils eine ballonförmige Struktur vorgesehen ist, welche zur Erzeugung von Auftrieb mit einem Gas gefüllt ist, welches leichter als Luft ist. Zum Vortrieb derartiger Drohnen können beispielsweise Mantelstrahlpropeller und ähnliche Vorrichtungen zum Einsatz kommen.

Sämtliche der eben beschriebenen, aus dem Stand der Technik bekannten Roboter sind jedoch hinsichtlich ihres Aufbaus relativ kompliziert und aufwendig oder weisen andere Nachteile auf, die im Einzelnen bereits beschrieben worden sind. Es ist demzufolge die Aufgabe der vorliegenden Erfindung, einen einfach aufgebauten und insgesamt effizienten Roboter bereitzustellen, welcher sich in Innenräumen unterhalb einer Raumdecke fortbewegen kann und in diesem Zusammenhang unterschiedliche Aufgabe erfüllen kann.

Zur Lösung dieser Aufgabe und zum Überwinden der oben beschriebenen Nachteile des bekannten Stands der Technik wird erfindungsgemäß vorgeschlagen, dass ein solcher Roboter wenigstens einen Auftriebskörper, welcher mit einem Gas gefüllt ist, welches leichter als Luft ist, und wenigstens eine Antriebseinheit umfasst, welche dazu eingerichtet ist, den wenigstens einen Auftriebskörper in Rotation zu einem Abrollen an der Raumdecke anzutreiben, wobei die Antriebseinheit derart bezüglich des Auftriebskörpers angeordnet ist, dass sie bei einer Bewegung des Roboters beabstandet von der Raumdecke verbleibt.

Dementsprechend wird in dem erfindungsgemäßen Roboter das bisher aus dem Stand der Technik noch nicht bekannte Konzept verwirklicht, dass dieser durch die Wirkung des im Auftriebskörper aufgenommenen Gases, beispielsweise Helium, an der Raumdecke gehalten wird, während der Auftriebskörper durch die Antriebseinheit in Rotation versetzt werden kann, was wiederum eine Bewegung des Roboters entlang der Raumdecke bewirken wird. Somit erfüllt der Auftriebskörper in dem erfindungsgemäßen Roboter die Doppelfunktion, einerseits das "leichter als Luft"-Gas aufzunehmen und zu halten und andererseits den Vortrieb des Roboters an der Raumdecke durch ein entsprechendes durch die Antriebseinheit angetriebenes Abrollen hervorzurufen. Die verwendete wenigstens eine Antriebseinheit kann hierbei von einem beliebigen Typ sein, insbesondere können verschiedene Arten von Elektromotoren zum Einsatz kommen, die präzise anzusteuern und energiesparend zu betreiben sind.

Hierbei könnte im einfachsten denkbaren Fall der erfindungsgemäße Roboter lediglich mit der wenigstens einen Antriebseinheit ausgestattet sein, um sich in gewünschter Weise entlang der Raumdecke bewegen zu können, beispielsweise wenn er ausschließlich als bewegliche Markierung oder ähnliches dienen soll. Sollen jedoch von ihm noch weitere Aufgaben abgesehen von einer derartigen Bewegung erfüllt werden, so kann er zusätzlich mit weiteren elektrischen und/oder elektronischen Komponenten ausgerüstet sein, beispielsweise einem Energiespeicher, einer Kommunikationseinheit, einer Steuerung mit unterschiedlichen Fähigkeiten und ähnlichem.

Insbesondere könnte vorgesehen sein, dass der erfindungsgemäße Roboter ferner wenigstens eine Sensoreinheit umfasst, welche vorzugsweise mit der bereits angesprochenen Antriebseinheit an einer gemeinsamen Trägereinheit angeordnet ist. Die entsprechende Trägereinheit kann beispielsweise in Form einer Bauplatine ausgeführt sein und selbstverständlich auch noch weitere der oben genannten und andere denkbare Komponenten tragen, um eine erhöhte Integration des Aufbaus des Roboters und eine platzsparende Konstruktion zu ermöglichen. Entsprechende Sensoreinheiten könnten eine Kameraeinheit, einen Radarsensor, Temperaturfühler, Positionsbestimmungseinheiten und verschiedenste andere denkbare Sensortypen umfassen, welche jeweils auf die von dem entsprechenden Roboter auszuführenden Arbeitsaufgaben abgestimmt sein können.

Insbesondere kann in einer besonders einfachen Bauform der erfindungsgemäße Roboter lediglich einen einzelnen, im Wesentlichen kugelförmigen Auftriebskörper umfassen, sodass ein omnidirektionales Abrollen und eine entsprechende Bewegung entlang einer horizontalen Raumdecke in allen Richtungen in einfacher Weise ermöglicht wird. Auch hinsichtlich anderer Eigenschaften des erfindungsgemäßen Roboters kann ein kugelförmiger Auftriebskörper vorteilhaft sein, beispielsweise kann dieser in einfacher Weise alleine durch seinen Innendruck in Form gehalten werden, ohne dass weitere Maßnahmen zur Formgebung davon notwendig wären. Hierbei versteht sich, dass sich ein solcher zunächst einmal kugelförmiger Auftriebskörper im Betrieb des entsprechenden Roboters um ein gewisses Maß verformen kann, beispielsweise im Kontaktbereich mit der Raumdecke abflachen kann, wobei der Grad der Verformung unter anderem von der Flexibilität des Materials des Auftriebskörpers und dem Innendruck des aufgenommenen Gases abhängen kann.

Alternativ wäre es jedoch ebenfalls denkbar, dass der wenigstens eine Auftriebskörper eine zylindrische Form aufweist, wodurch gegebenenfalls eine Verringerung der Bauhöhe des Roboters erzielt werden kann. Beispielsweise wäre eine Ausführungsform denkbar, in welcher eine Mehrzahl von zylindrischen Auftriebskörpern vorgesehen sein können, welche durch ein externes Strukturelement miteinander gekoppelt sind, wobei das externe Strukturelement vorzugsweise die wenigstens eine Antriebseinheit umfassen kann. Hierzu wären in einer besonders einfachen Variante einer solchen Ausführungsform Ausgestaltungen denkbar, in welchen zwei zylindrische Auftriebskörper durch ein solches externes Strukturelement miteinander gekoppelt sind und durch eine differenziell angetriebene Rotation der beiden zylindrischen Auftriebskörper eine beliebige Bewegung des Roboters entlang der Raumdecke hervorgerufen werden kann.

In einer besonders bevorzugten Bauweise eines erfindungsgemäßen Roboters, welche insbesondere in der genannten Ausführungsform mit einem kugelförmigen Auftriebskörper implementiert sein kann, kann ein einzelner Auftriebskörper vorgesehen sein und die Antriebseinheit und gegebenenfalls die Sensoreinheit können vollständig innerhalb des Auftriebskörpers aufgenommen sein, vorzugsweise in einer nicht fest mit dem Auftriebskörper verbundenen Weise. Dementsprechend würden sich die genannten Komponenten durch die Wirkung der Schwerkraft stets an einer vertikal unteren Position innerhalb des Auftriebskörpers anordnen und mit der Innenseite des Auftriebskörpers in Kontakt stehen, so dass dort die Antriebseinheit eine Antriebskraft auf den Antriebskörper einwirken kann. Wenngleich lediglich ausdrücklich die Antriebseinheit und die Sensoreinheit angesprochen worden sind, so versteht es sich, dass in einer derartigen Bauform sämtliche elektrischen und elektronischen sowie mechanischen Komponenten des Roboters innerhalb des Auftriebskörpers angeordnet sein können, sodass letztlich die Außenform des Auftriebskörpers auch die Gesamtabmessungen des Roboters bestimmt. Eine derartige Ausgestaltung eines erfindungsgemäßen Roboters hat unter anderem den Vorteil, dass sämtliche weiteren Komponenten hermetisch innerhalb des Auftriebskörpers eingeschlossen sind und damit keinen schädlichen Umwelteinflüssen ausgesetzt sind.

Alternativ könnte jedoch auch ein einzelner Auftriebskörper vorgesehen sein und die Antriebseinheit könnte außerhalb des Auftriebskörpers angeordnet sein und vorzugsweise mittels innerhalb des Auftriebskörpers angeordneter Magnete in Kontakt mit dem Auftriebskörper gehalten werden. Dementsprechend könnten hier ein oder mehrere Permanentmagnete innerhalb des Auftriebskörpers aufgenommen werden, welche sich in ähnlicher Weise wie oben bereits beschrieben durch die Wirkung der Schwerkraft in einem vertikal unteren Bereich davon anordnen würden, wobei dementsprechend an der Außenseite des Auftriebskörpers durch magnetische Anziehung ebenfalls mittels wenigstens eines Permanentmagneten die Antriebseinheit angekoppelt werden könnte. Auch hier versteht sich, dass die die Antriebseinheit umfassende und magnetisch ankoppelbare Baugruppe auch noch beliebige weitere Baugruppen des Roboters umfassen kann, beispielsweise die bereits genannte Sensoreinheit, eine Energiespeichereinheit oder ähnliches.

Weiter alternativ wären selbstverständlich auch Ausführungsformen denkbar, in welchen die Antriebseinheit und beliebige andere Baugruppen mittels einer anderen geeigneten Halterung derart an dem Auftriebskörper außerhalb davon angebracht sind, dass sie sich stets beabstandet von der entsprechenden Raumdecke befinden, wenn der Roboter sich entlang dieser fortbewegt.

Des Weiteren soll darauf hingewiesen sein, dass in dem erfindungsgemäßen Roboter die Antriebseinheit als omnidirektionaler Antrieb ausgeführt sein kann, insbesondere mit zwei oder mehr mit dem Auftriebskörper in Kontakt stehenden Antriebsrädern oder einem kugelförmigen Antriebselement. Auf diese Weise kann eine beliebige Bewegung des Roboters entlang der Raumdecke hervorgerufen werden, indem die entsprechenden Antriebseinheiten in geeigneter Weise angesteuert und betrieben werden. Insbesondere kann durch differenziellen Antrieb wenigstens zweier mit dem Auftriebskörper in Kontakt stehender Antriebsräder sowohl eine Bewegung entlang beliebiger Richtungen als auch eine Drehung des Roboters auf der Stelle erzielt werden, was beispielsweise dann von Vorteil sein kann, wenn eine Kamera oder eine ähnliche Sensoreinheit des Roboters ausgerichtet werden muss, ohne dass der Roboter sich fortbewegen soll.

Weiterhin soll darauf hingewiesen sein, dass der Auftriebskörper aus einem transparenten und/oder verformbaren Material gebildet sein kann, wobei insbesondere in Fällen, in welchen optische Sensoreinheiten innerhalb des Auftriebskörpers aufgenommen sind, durch die Transparenz des Auftriebskörpers die Aufnahme optischer Bilder durch diesen hindurch begünstigt wird. Die Verwendung von verformbarem Material erlaubt ferner in gewissem Maße das Überfahren von Unebenheiten oder kleineren Hindernissen an der entsprechenden Raumdecke, da die Außenform des Auftriebskörpers diese in entsprechendem Maß ausgleichen kann. Ferner kann durch eine Verformbarkeit des Materials eine größere Kontaktfläche zwischen dem Auftriebskörper und der Raumdecke geschaffen werden, was sich in verbesserten Fortbewegungseigenschaften des Roboters niederschlagen kann. Des Weiteren kann das Material des Auftriebskörpers beispielsweise dahingehend gewählt werden, dass das darin aufgenommene Gas möglichst wenig austreten kann bzw. möglichst lange in dem Auftriebskörper in einem derartigen Maße verbleibt, dass der Betrieb davon möglich ist. Hierzu könnten auch beliebige geeignete Beschichtungen oder ähnliches zum Einsatz kommen, wobei ferner ebenfalls die mit der Raumdecke in Kontakt stehende Außenseite des Auftriebskörpers derart behandelt werden könnte, dass ihre Reibung mit der Raumdecke erhöht wird, um bei einer Fortbewegung einen Schlupf zu minimieren.

Des Weiteren sind Ausführungsformen denkbar, in welchen der wenigstens eine Auftriebskörper von einem weiteren Hüllenkörper umgeben ist, welcher von im Wesentlichen gleicher Form, jedoch größeren Abmessungen als der Auftriebskörper ist und vorzugsweise aus einem transparenten und/oder verformbaren Material gebildet ist. Dementsprechend kann in derartigen Ausführungsformen beispielsweise die Antriebseinheit innerhalb des Auftriebskörpers in der oben beschriebenen Weise angeordnet sein und eine Sensoreinheit oder andere weitere Komponenten können zwischen dem Auftriebskörper und dem weiteren Hüllenkörper aufgenommen sein, um die Vorteile der beiden zuvor beschriebenen Varianten in gewissem Maße zu kombinieren.

Wie bereits weiter oben angedeutet, kann der erfindungsgemäße Roboter ferner eine Energie-Speichereinheit zur Versorgung von Komponenten des Roboters umfassen, welche vorzugsweise kontaktlos mittels Induktion aufladbar sein kann. Durch die Möglichkeit der Aufladung per Induktion wird es ermöglicht, die Energie-Speichereinheit ebenfalls vollständig in dem Auftriebskörper anzuordnen, ohne dass dementsprechend zum Aufladen davon ein direkter mechanischer Kontakt über einen Anschluss oder ähnliches hergestellt werden müsste. Alternativ sind jedoch auch Ausführungsformen des erfindungsgemäßen Roboters denkbar, in welchen auf eine Energie-Speichereinheit zum Betreiben der Antriebseinheit und anderen Komponenten verzichtet wird und die Energieversorgung permanent induktiv sichergestellt ist, beispielsweise mittels innerhalb der entsprechenden Raumdecke verlaufenden Induktionsantennen.

Ebenfalls wäre es denkbar, in einem erfindungsgemäßen Roboter einen Sprungmechanismus zu integrieren, welcher dazu eingerichtet ist, bei einer Betätigung davon ein Abstoßen des wenigstens einen Auftriebskörpers von der Raumdecke zu bewirken. Auf diese Weise könnten beispielsweise Hindernisse derart umgangen werden, dass sich der entsprechende Roboter mit einer gewissen Fahrgeschwindigkeit auf das Hindernis zubewegt, rechtzeitig der Sprungmechanismus ausgelöst wird, um ein Abstoßen von der Raumdecke zu bewirken und damit dem Hindernis vertikal nach unten auszuweichen, bevor der Roboter durch die Auftriebswirkung erneut in Kontakt mit der Raumdecke kommt.

Weiterhin soll darauf hingewiesen sein, dass wenngleich entsprechende erfindungsgemäße Roboter selbstverständlich ferngesteuert betrieben werden könnten und zu diesem Zweck eine geeignete Steuereinheit sowie eine Kommunikationseinheit umfassen können, welche unmittelbar Arbeitsanweisungen und insbesondere Steueranweisungen für die Antriebseinheit von einem menschlichen Bediener mittels einer Fernsteuerung entgegennehmen können, so alternativ oder zusätzlich entsprechende Roboter jedoch ebenfalls Steuereinheiten umfassen können, welche dazu eingerichtet sind, den Roboter in einem autonomen Modus zu betreiben. Hierzu wäre eine geeignete Sensorik notwendig, beispielsweise eine Positionsbestimmungssensorik und/oder eine Bildaufnahmeeinheit mit einer nachgeschalteten Bildauswertung, um die gewünschten Arbeitsaufgaben des Roboters anhand dieser Sensorerfassungen und geeigneter Datenverarbeitungsprogramme autonom durchführen zu können.

In einer weiteren Ausführungsform der Erfindung umfasst der Roboter eine Mehrzahl von Auftriebskörpern, welche durch ein externes Strukturelement miteinander gekoppelt sind, wobei das externe Strukturelement vorzugsweise die wenigstens eine Antriebseinheit umfasst. Vorzugsweise teilen sich mehrere, besonders bevorzugt alle, dieser Auftriebskörper eine Antriebseinheit, so dass ein effektiver und koordinierter Antrieb möglich ist.

Weitere Merkmale der vorliegenden Empfindung werden aus der nachfolgenden Beschreibung von Ausführungsformen davon noch deutlicher, wenn diese zusammen mit den beiliegenden Figuren betrachtet wird, welche sämtliche als rein schematisch und insbesondere nicht maßstabsgetreu zu verstehen sind. Diese zeigen im Einzelnen:
- Figuren 1a und 1b: zwei Varianten einer ersten Ausführungsform eines erfindungsgemäßen Roboters;
- Figuren 2a und 2b: zwei Varianten einer zweiten Ausführungsform eines erfindungsgemäßen Roboters;
- Figur 3: eine Ansicht einer dritten Ausführungsform eines erfindungsgemäßen Roboters; und
- Figur 4: eine Ansicht einer vierten Ausführungsform eines erfindungsgemäßen Roboters, jeweils in schematischer Schnittansicht.

Die beiliegenden Figuren zeigen jeweils verschiedene Varianten und Ausführungsformen von erfindungsgemäßen Robotern in schematischen Schnittansichten, welche sich unterhalb einer Raumdecke D befinden. Hierbei werden sie durch die Wirkung eines jeweiligen Auftriebskörpers an der jeweiligen Raumdecke D gehalten, welcher mit einem Gas gefüllt ist, welches leichter als Luft ist, insbesondere Helium. Es sei allgemein darauf hingewiesen, dass die Auftriebskörper sämtlicher hier diskutierter Roboter jeweils mit entsprechenden Ventilen versehen sein können, um ein Befüllen davon mit dem entsprechenden Gas zu ermöglichen.

Die einzelnen Ausführungsformen, die im Folgenden anhand der Figuren beschrieben werden, unterscheiden sich hierbei einerseits durch Form und Anzahl der Auftriebskörper und andererseits durch die Anordnung der weiteren funktionellen Komponenten der jeweiligen Roboter, wobei ähnliche oder analoge Komponenten der einzelnen Roboter mit gleichen Bezugszeichen bezeichnet sind, entsprechend erhöht um ein Vielfaches von 100 und/oder mit einem Apostroph versehen.

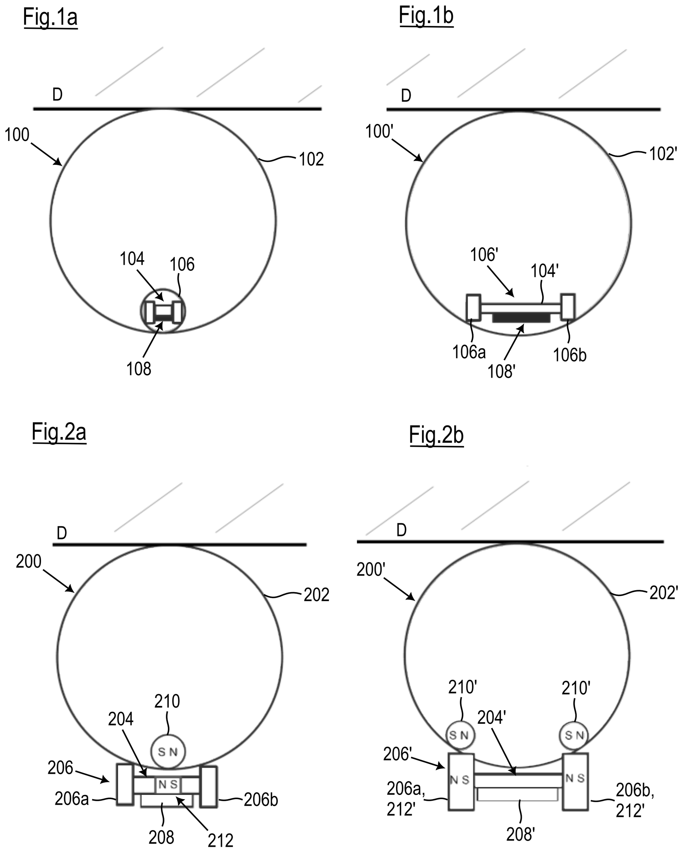

Hierbei zeigen die Figuren 1a und 1b zunächst einmal zwei Varianten 100 und 100' von erfindungsgemäßen Robotern, welche jeweils einen einzelnen kugelförmigen Auftriebskörper 102 bzw. 102' umfassen. Innerhalb dieses jeweiligen Auftriebskörpers 102, 102' ist eine mechanische Baugruppe 104, 104' aufgenommen, welche durch die Wirkung der Schwerkraft unten innerhalb des Auftriebskörpers 102, 102' in Kontakt mit diesem an dessen innerer Wand anlieat.

Hierbei unterscheiden sich die beiden Varianten 100 und 100' aus den Figuren 1a und 1b dadurch, wie die jeweiligen mechanischen Baugruppen 104, 104' aufgebaut sind. Beide dieser Baugruppen 104, 104' umfassen jedoch eine Antriebseinheit 106, 106', welche dazu eingerichtet ist, den Auftriebskörper 102, 102' in Rotation zu versetzen, um ein Abrollen davon und damit eine Fortbewegung entlang der Raumdecke D zu ermöglichen.

Ferner sei darauf hingewiesen, dass die Baugruppen 104, 104' jeweils auch noch weitere funktionelle Komponenten umfassen können, wie beispielsweise eine hier schematisch als ausgefülltes Rechteck dargestellte Sensoreinheit 108, 108', welche beispielsweise durch eine optische Kamera oder ähnliches gebildet sein kann. Zu diesem Zweck ist es in den Varianten aus den Figuren 1a und 1b vorteilhaft, wenn der Auftriebskörper 102, 102' jeweils aus einem transparenten Material gebildet ist.

Beide Varianten 106, 106' der entsprechenden Antriebseinheiten sind hierbei als omnidirektionale Antriebe ausgeführt, wobei in der Variante aus Figur 1a auf ein einzelnes kugelförmiges Antriebselement 106 zurückgegriffen wird, welches bei einer Rotation den Auftriebskörper 102 in gegenläufige Rotation versetzt und damit den Antrieb des Roboters 100 bewirken kann. Dem hingegen sind in der Variante aus Figur 1b zwei Antriebsräder 106a, 106b als Teil der Antriebseinheit 106' vorgesehen, welche differenziell angetrieben werden können, um ebenfalls eine omnidirektionale Bewegung des Auftriebskörpers 102' und damit des Roboters 100' entlang der Raumdecke D bewirken zu können.

Hierbei zeichnen sich die beiden Varianten aus den Figuren 1a und 1b dadurch aus, dass sämtliche ihrer elektrischen, elektronischen und mechanischen Komponenten vollständig innerhalb der Auftriebskörper 102, 102' aufgenommen sind, sodass diese Komponenten nicht von externen Einflüssen beeinträchtigt werden können und dementsprechend ein sicherer und zuverlässiger Betrieb erzielt werden kann. Allerdings ist in derartigen Ausführungsformen dem hingegen die Montage und Wartung der entsprechenden Komponenten schwierig, da mittels eines geeigneten Zugangs auf den Innenraum des Auftriebskörpers 102, 102' zugegriffen werden muss, um die entsprechenden Komponenten erreichen zu können, einschließlich der Antriebseinheiten 106, 106'. Ferner müssten gegebenenfalls innerhalb des Auftriebskörpers 102, 102' vorgesehene Energie-Speichereinheiten mittels Induktion aufgeladen werden, da auch auf diese nicht ohne weiteres von außen zugegriffen werden kann, sofern nicht erneut ein entsprechender Zugang geöffnet werden sollte.

Dem hingegen haben die beiden Varianten 200 und 200' aus den Figuren 2a und 2b den Vorteil, dass ihre Antriebseinheiten 206, 206' ebenso wie die als leeres Rechteck dargestellte Sensoreinheiten 208, 208' und mögliche weitere Komponenten außerhalb der Auftriebskörper 202, 202' angeordnet sind. Um die Baugruppen 204, 204' dennoch in einer geeigneten Position beabstandet von der Raumdecke D zu halten, insbesondere an einer vertikal unteren Seite der Auftriebskörper 202, 202', ist zu diesem Zweck eine magnetische Kopplung vorgesehen, wobei jeweils ein oder mehrere Permanentmagnete 210, 210' innerhalb des Auftriebskörpers 202, 202' aufgenommen sind und sich aufgrund der Wirkung der Schwerkraft in einem unteren Bereich davon anordnen werden, während die Baugruppen 204, 204' jeweils ebenfalls mit einem oder mehreren Permanentmagneten 212, 212' versehen sind, um eine entsprechende Kopplung zu ermöglichen. Hierbei ist in der Variante aus Figur 2a lediglich ein einzelnes, mittiges Magnetpaar vorgesehen, während in der Variante aus Figur 2b die Räder 206a, 206b der Antriebseinheit 206 selbst als Permanentmagneten ausgeführt sind und entsprechend mit den Permanentmagneten 210' innerhalb des Auftriebskörpers 202 magnetisch koppeln können.

Dementsprechend zeichnen sich diese beiden Varianten eines erfindungsgemäßen Roboters dadurch aus, dass einfach auf ihre Antriebseinheiten und sonstigen Baugruppen zugegriffen werden kann, was sie jedoch gleichzeitig empfindlicher für äußere Einflüsse macht.

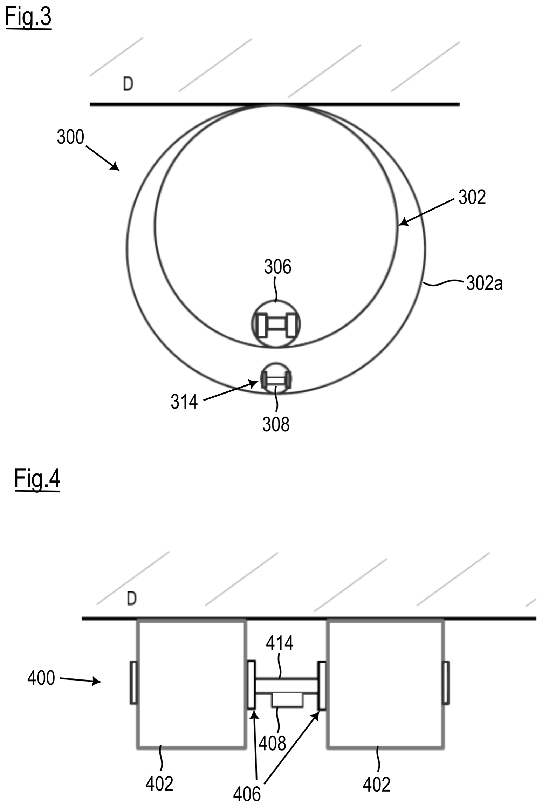

Die Ausführungsform 300 aus Figur 3 zeichnet sich dem hingegen dadurch aus, dass zusätzlich zu dem Auftriebskörper 302 ein weiterer Hüllenkörper 302a vorgesehen ist, welcher den Auftriebskörper 302 umgibt und im Wesentlichen die gleiche Form, also ebenfalls eine Kugelform, jedoch größere Abmessungen aufweist. Hierbei ist die Antriebseinheit 306 ähnlich wie in der Variante 100 aus Figur 1a durch ein kugelförmiges Antriebselement ausgeführt, welches sich innerhalb des Auftriebskörpers 302 befindet, wobei in einer nicht gezeigten weiteren Variante jedoch ebenfalls auf die Radanordnung aus Figur 1b zurückgegriffen werden könnte. Ferner ist eine weitere Baugruppe 314 zwischen dem Auftriebskörper 302 und dem weiteren Hüllenkörper 302a angeordnet, welche beispielsweise die Sensoreinheit 308 tragen kann. Hierbei ordnen sich erneut durch die Wirkung der Schwerkraft die Antriebseinheit 306 sowie die weitere Baugruppe 314 jeweils vertikal unten innerhalb des Auftriebskörpers 302 bzw. des weiteren Hüllenkörpers 302a an. Diese Ausführungsform 300 verbindet dementsprechend die Vorteile der Ausführungsformen aus den Figuren 1 und 2, ist jedoch andererseits durch das zusätzliche Vorsehen des weiteren Hüllenkörpers 302a konstruktiv aufwendiger und benötigt mehr Komponenten.

Ferner sei auf die vierte Ausführungsform aus Figur 4 hingewiesen, welche sich durch eine besonders flache Bauform auszeichnet und dementsprechend besonders für Räume geeignet ist, in welchen der zur Verfügung stehende vertikale Raum beschränkt ist. Hierbei umfasst diese Variante 400 zwei zylindrisch aufgebaute Auftriebskörper 402, welche durch ein externes Strukturelement 414 miteinander verbunden sind, welches einerseits jeweilige Antriebseinheiten 406 für die beiden Auftriebskörper 402 trägt und zum anderen die Sensoreinheit 408. Hierbei kann in der Ausführungsform 400 aus Figur 4 durch differenziellen Antrieb der beiden Auftriebskörper 402 mittels der beiden gesonderten Antriebseinheiten 406 ein omnidirektionaler Antrieb erreicht werden, durch welchen der Roboter 400 in gleicher Weise wie die bereits beschriebenen ersten bis dritten Ausführungsformen an der Raumdecke D entlanglaufen kann.

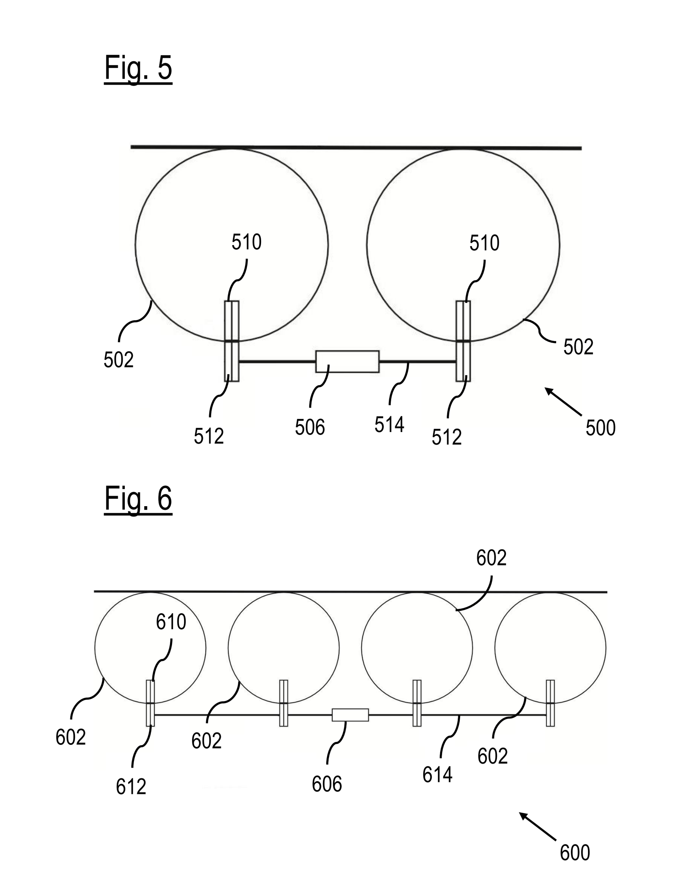

In einer in Figur 5 gezeigten fünften Ausführungsform der Erfindung umfasst ein Roboter 500 eine Mehrzahl von Auftriebskörpern 502, insbesondere kugelförmige Auftriebskörper 502, welche durch ein externes Strukturelement 514 miteinander verbunden sind. Das Strukturelement 514 trägt eine gemeinsame Antriebseinheit 506, welche Antriebskraft für beide Auftriebskörper 502 bereitstellt. Vergleichbar mit den in Figuren 2a und 2b beschriebenen Varianten 200 und 200', können im Inneren beider Auftriebskörper 502 jeweils innere Räder 510 vorgesehen sein, welche in magnetischer Wechselwirkung mit jeweiligen äußeren Rädern 512, außerhalb der Auftriebskörper 502, stehen. Insbesondere können die Räder 510, 512 durch entsprechend in Anziehung miteinander stehende Permanentmagnete gebildet sein. Die äußeren Antriebsräder 512 können beide durch die gemeinsame Antriebseinheit 506 angetrieben werden, beispielsweise auf einer gemeinsamen Antriebsachse gehalten sein.

Schließlich ist in Figur 6 eine sechste Ausführungsform in der Erfindung illustriert, welche einen Roboter 600 mit insgesamt vier in einer Reihe angeordneten, insbesondere kugelförmigen Auftriebskörpern 602 umfasst, welche alle durch ein gemeinsames externes Strukturelement 614 miteinander verbunden sind. Eine an dem Strukturelement 614 getragene gemeinsame Antriebseinheit 606 kann Angriffskraft für die Bewegung aller vier Auftriebskörper 602 bereitstellen. Insbesondere können nach dem Vorbild der fünften Ausführungsform gemäß Figur 5 in jedem der vier Auftriebskörper 602 jeweils innere Räder 610 vorgesehen sein, welchen jeweils äußere Räder 612 außerhalb der Auftriebskörper 602 zugeordnet sind, wobei die inneren Räder 610 und die äußeren Räder 612 miteinander durch Magnetkraft verbunden sein können, so dass sie an gegenüberliegenden Seiten einer Wandung der Auftriebskörper 602 abrollen. Vorzugsweise sind alle äußeren Räder 612 der vier Auftriebskörper 602 an einer gemeinsamen Achse des Strukturelements 614 gelagert, wobei die Achse durch die Antriebseinheit 606 drehend antreibbar ist.

Es wird darauf hingewiesen, dass die Roboter 500 und 600 der fünften beziehungsweise sechsten Ausführungsform jeweils mit einem oder mehreren weiteren Merkmalen weitergebildet sein können, wie sie oben im Zusammenhang mit den Ausführungsformen gemäß Figuren 1 bis 4 beschriebenen worden, und insbesondere jeweils Sensoreinheiten der oben beschriebenen Art aufweisen können, wenngleich diese in Figuren 5 und 6 nicht dargestellt sind.

## Patentansprüche

1. Roboter (100, 100', 200, 200', 300, 400), welcher zu einer Bewegung unterhalb und in Kontakt mit einer Raumdecke (D) eingerichtet ist, umfassend:
- wenigstens einen Auftriebskörper (102, 102', 202, 202', 302, 402), welcher mit einem Gas gefüllt ist, welches leichter als Luft ist; und
- wenigstens eine Antriebseinheit (106, 106', 206, 206', 306, 406), welche dazu eingerichtet ist, den wenigstens einen Auftriebskörper (102, 102', 202, 202', 302, 402) in Rotation zu einem Abrollen an der Raumdecke (D) anzutreiben;
wobei die wenigstens eine Antriebseinheit (106, 106', 206, 206', 306, 406) derart bezüglich des Auftriebskörpers (102, 102', 202, 202', 302, 402) angeordnet ist, dass sie bei einer Bewegung des Roboters (100, 100', 200, 200', 300, 400) beabstandet von der Raumdecke (D) verbleibt.

2. Roboter (100, 100', 200, 200', 300, 400) nach Anspruch 1,
ferner umfassend wenigstens eine Sensoreinheit (108, 108', 208, 208', 308, 408), welche vorzugsweise mit der wenigstens Antriebseinheit (106, 106', 206, 206', 306, 406) an einer gemeinsamen Trägereinheit (104, 104', 204, 204', 414) angeordnet ist.

3. Roboter (100, 100', 200, 200', 300) nach einem der vorhergehenden Ansprüche,
wobei ein einzelner, im Wesentlichen kugelförmiger Auftriebskörper (102, 102', 202, 202', 302) vorgesehen ist.

4. Roboter (400) nach einem der Ansprüche 1 und 2,
wobei der wenigstens eine Auftriebskörper (402) eine zylindrische Form aufweist.

5. Roboter (400) nach Anspruch 4,
wobei eine Mehrzahl von zylindrischen Auftriebskörpern (402) vorgesehen sind, welche durch ein externes Strukturelement (414) miteinander gekoppelt sind, wobei das externe Strukturelement (414) vorzugsweise die wenigstens eine Antriebseinheit (406) umfasst.

6. Roboter (100, 100', 300) einem der vorhergehenden Ansprüche,
wobei ein einzelner Auftriebskörper (102, 102', 302) vorgesehen ist und die wenigstens eine Antriebseinheit (106, 106', 306) und ggf. die Sensoreinheit (108, 108') vollständig innerhalb des Auftriebskörpers (102, 102', 302) aufgenommen ist, vorzugsweise in einer nicht fest mit dem Auftriebskörper (102, 102', 302) verbundenen Weise.

7. Roboter (200, 200') nach einem der Ansprüche 1 bis 4,
wobei ein einzelner Auftriebskörper (202, 202') vorgesehen ist und die wenigstens eine Antriebseinheit (206, 206') außerhalb des Auftriebskörpers (202, 202') angeordnet ist und vorzugsweise mittels innerhalb des Auftriebskörpers (202, 202') angeordneter Magnete (210, 210') in Kontakt mit dem Auftriebskörper (202, 202') gehalten wird.

8. Roboter (100, 100', 200, 200', 300, 400) nach einem der vorhergehenden Ansprüche,
wobei die wenigstens eine Antriebseinheit (106, 106', 206, 206', 306, 406) als omnidirektionaler Antrieb ausgeführt ist, insbesondere mit zwei oder mehr mit dem Auftriebskörper in Kontakt stehenden Antriebsrädern (106a, 106b) oder einem kugelförmigen Antriebselement (106, 306).

9. Roboter (100, 100', 200, 200', 300, 400) nach einem der vorhergehenden Ansprüche,
wobei der Auftriebskörper (102, 102', 202, 202', 302, 402) aus einem transparenten und/oder verformbaren Material gebildet ist.

10. Roboter (300) nach einem der vorhergehenden Ansprüche,
wobei der wenigstens eine Auftriebskörper (302) von einem weiteren Hüllenkörper (302a) umgeben ist, welcher von im Wesentlichen gleicher Form jedoch größeren Abmessungen als der Auftriebskörper (302) ist und vorzugsweise aus einem transparenten und/oder verformbaren Material gebildet ist.

11. Roboter (100, 100', 200, 200', 300, 400) nach einem der vorhergehenden Ansprüche,
wobei eine Energie-Speichereinheit zur Versorgung von Komponenten des Roboters (100, 100', 200, 200', 300, 400) umfasst ist, welche vorzugsweise kontaktlos mittels Induktion aufladbar ist.

12. Roboter (100, 100', 200, 200', 300, 400) nach einem der vorhergehenden Ansprüche,
ferner umfassend einen Sprungmechanismus, welcher dazu eingerichtet ist, bei einer Betätigung ein Abstoßen des wenigstens einen Auftriebskörpers (102, 102', 202, 202', 302, 402) von der Raumdecke (D) zu bewirken.

13. Roboter (100, 100', 200, 200', 300, 400) nach einem der vorhergehenden Ansprüche,
ferner umfassend eine Steuereinheit, welche dazu eingerichtet ist, den Roboter (100, 100', 200, 200', 300, 400) in einem autonomen Modus zu betreiben.

14. Roboter (400, 500, 600) nach einem der vorhergehenden Ansprüche,
wobei eine Mehrzahl von Auftriebskörpern (402, 502, 602) vorgesehen sind, welche durch ein externes Strukturelement (414, 514, 614) miteinander gekoppelt sind, wobei das externe Strukturelement (414, 514, 614) vorzugsweise die wenigstens eine Antriebseinheit (406, 506, 606) umfasst.
